Europäisches Patentamt

European Patent Office

Office européen des brevets

(11) Veröffentlichungsnummer: **0 113 851**
**B1**

# (12) EUROPÄISCHE PATENTSCHRIFT

(45) Veröffentlichungstag der Patentschrift:
08.04.87

(21) Anmeldenummer: **83112264.3**

(22) Anmeldetag: **06.12.83**

(51) Int. Cl.⁴: **F 16 M 11/10**

(54) **Trägeranordnung für ein Datensichtgerät.**

(30) Priorität: **18.01.83 DE 3301467**

(43) Veröffentlichungstag der Anmeldung:
**25.07.84 Patentblatt 84/30**

(45) Bekanntmachung des Hinweises auf die Patenterteilung:
**08.04.87 Patentblatt 87/15**

(84) Benannte Vertragsstaaten:
**DE FR GB IT NL**

(56) Entgegenhaltungen:
**EP-A-0 068 889**
**CH-B-495 032**
**DE-A-2 847 135**
**GB-A-902 746**
**US-A-3 421 457**
**US-A-3 977 641**
**US-A-4 269 383**

(73) Patentinhaber: **Nixdorf Computer Aktiengesellschaft, Fürstenallee 7, D-4790 Paderborn (DE)**

(72) Erfinder: **Haftmann, Johannes, Ferdinandstrasse 32, D-4790 Paderborn (DE)**

(74) Vertreter: **Patentanwälte Schaumburg & Thoenes, Mauerkircherstrasse 31 Postfach 86 07 48, D-8000 München 80 (DE)**

## Beschreibung

Die Erfindung betrifft eine Trägeranordnung für ein Datensichtgerät mit einem Fuß und einer an diesem Fuß um eine im wesentlichen horizontale Schwenkachse schwenkbar gelagerten Trägerplatte, die an ihrer Unterseite Auflageelemente (20, 22) aufweist, mit denen sie beiderseits der Schwenkachse auf gegenläufig geneigten Gleitflächen des Fußes aufliegt, siehe EP-A-68.889.

Durch Verschwenken der Trägerplatte kann eine Bedienungsperson sich den Neigungswinkel der Sichtscheibe des Datensichtgerätes einstellen, um z. B. störende Reflexe auf der Sichtscheibe zu beseitigen. Hierzu ist üblicherweise die Trägerplatte um eine an dem Fuß gelagerte Welle verschwenkbar. Um die Trägerplatte und damit auch das Datensichtgerät in einer bestimmten Schwenkstellung festhalten zu können, müssen entweder Feststellschrauben oder Bremsscheiben vorgesehen sein, wobei die Bremskraft in letzterem Falle einstellbar sein muß, um dem Verschleiß der Bremsscheiben Rechnung zu tragen. Diese Mechanik ist teuer in der Herstellung, umständlich zu montieren und nicht wartungsfrei. In der Regel müssen ferner Mittel vorgesehen sein, um einen Gewichtsausgleich in der jeweiligen Schwenkstellung des relativ schweren Datensichtgerätes zu ermöglichen.

Ein unbeabsichtigtes Kippen des Datensichtgerätes wird bei einer Trägeranordnung der eingangs genannten Art (EP-A-68.889) dadurch vermieden, daß der Fuß der Trägeranordnung mit stufenartigen gegenläufig geneigten Gleit- oder Stützflächen ausgebildet ist, in deren Stufen die Trägerplatte mit dem darauf angeordneten Datensichtgerät in bestimmten Schwenkstellungen verrastet. Der Nachteil dieser Anordnung besteht darin, daß das relativ schwere Datensichtgerät zum Verschwenken angehoben und umgesetzt werden muß, wobei der Abstand zwischen dem Datensichtgerät und dem Betrachter verändert wird.

Der Erfindung liegt die Aufgabe zugrunde, eine preisgünstig herzustellende und leicht zu handhabende Trägeranordnung der bekannten Art so auszubilden, daß beim Verschwenken des Datensichtgerätes der Abstand zwischen dessen Gehäusevorderseite und der Bedienungsperson im wesentlichen unverändert bleibt.

Die Erfindung, wie sie in dem Anspruch 1 gekennzeichnet ist, löst diese Aufgabe. Besondere Ausführungsarten der Erfindung sind in den abhängigen Ansprüchen angegeben.

Bei der erfindungsgemäßen Lösung wird beim Verschwenken des Datensichtgerätes und somit auch der Trägerplatte nicht diese vom Betrachter weg oder auf den Betrachter zubewegt, da die Trägerplatte mit der stationären Fußplatte durch ein Gelenk verbunden ist. Dagegen werden die mit der verschiebbaren Zwischenplatte verbundenen Gleitflächen vom Betrachter weg bzw. auf den Betrachter zubewegt.

Obwohl das auf der Trägerplatte angeordnete Datensichtgerät mit nur geringem Kraftaufwand verschwenkt werden kann, sind zur Arretierung der Trägerplatte dennoch keine Hemm- oder Feststellelemente erforderlich, da die Arretierung der Trägerplatte in jeder Schwenklage durch Selbsthemmung proportional dem Gerätegewicht erfolgt.

Um eine kontrollierte Verschiebung der Zwischenplatte gegenüber der Fußplatte sicherzustellen, ist zweckmäßigerweise an letzterer eine Schiebeführung für die Zwischenplatte ausgebildet, die beispielsweise von einer rechteckigen Aussparung oder Vertiefung in der Fußplatte gebildet sein kann. Das Gelenk zwischen Fußplatte und Trägerplatte muß einerseits natürlich eine Schwenkbewegung zwischen Trägerplatte und Fußplatte zulassen und andererseits lediglich eine Relativbewegung zwischen Trägerplatte und Fußplatte in der Verschieberichtung der Zwischenplatte verhindern. Diese Forderungen können auf einfache Weise dadurch erfüllt werden, daß das Gelenk zwischen Fußplatte und Trägerplatte eine mit einer der beiden Platten verbundene Gabel und einen mit der jeweils anderen Platte verbundenen, in die Gabel eingreifenden Zapfen umfaßt. Beispielsweise kann die Gabel an der Fußplatte ausgebildet sein, während der Zapfen parallel zu der Trägerplatte an dieser befestigt ist. Diese Art von Gelenk läßt sich äußerst einfach herstellen und erfordert keinerlei Montageaufwand. Zur Montage der Trägeranordnung braucht lediglich die Zwischenplatte auf die Fußplatte und die Trägerplatte auf die Zwischenplatte so aufgesetzt werden, daß der an ihr befestigte Zapfen in die Gabel der Fußplatte eingreift. Die Zwischenplatte kann mit einer Aussparung zum Durchtritt des mit der Fußplatte verbundenen Gelenkteiles versehen sein.

Gemäß einer einfachen und materialsparenden Ausführung sind die Gleitflächen an mit der Zwischenplatte verbundenen trapezförmigen Böcken ausgebildet. Der Neigungswinkel der Gleitflächen an den Böcken läßt sich bei vorgegebenem maximalen Schwenkwinkel und vorgegebener Lage der Schwenkachse auf einfache Weise graphisch oder durch einfache trigonometrische Berechnungen ermitteln. Vorzugsweise wird der maximale Schwenkwinkel so gewählt, daß er mindestens gleich dem Neigungswinkel der Sichtscheibe des Datensichtgerätes gegenüber der Vertikalen ist. So kann die Sichtscheibe mindestens zwischen einer vertikalen Stellung und der bei horizontaler Lage des Datensichtgerätes vorgegebenen Stellung verstellt werden. Der Fuß kann in an sich bekannter Weise als Drehteller ausgebildet sein, so daß das Datensichtgerät nicht nur verschwenkbar sondern auch drehbar ist.

Weitere Merkmale und Vorteile der Erfindung ergeben sich aus der folgenden Beschreibung, welche in Verbindung mit den beigefügten

2

Zeichnungen die Erfindung anhand eines Ausführungsbeispiels erläutert. Es zeigen:

Fig. 1 einen senkrecht zur Schwenkachse verlaufenden Vertikalschnitt durch die erfindungsgemäße Trägeranordnung mit horizontaler Stellung der Trägerplatte,

Fig. 2 einen der Fig. 1 entsprechenden Schnitt mit maximal verschwenkter Trägerplatte,

Fig. 3 die Fußplatte und die Zwischenplatte in einer perspektivischen Explosionsdarstellung und

Fig. 4 eine Draufsicht auf die Unterseite der Trägerplatte.

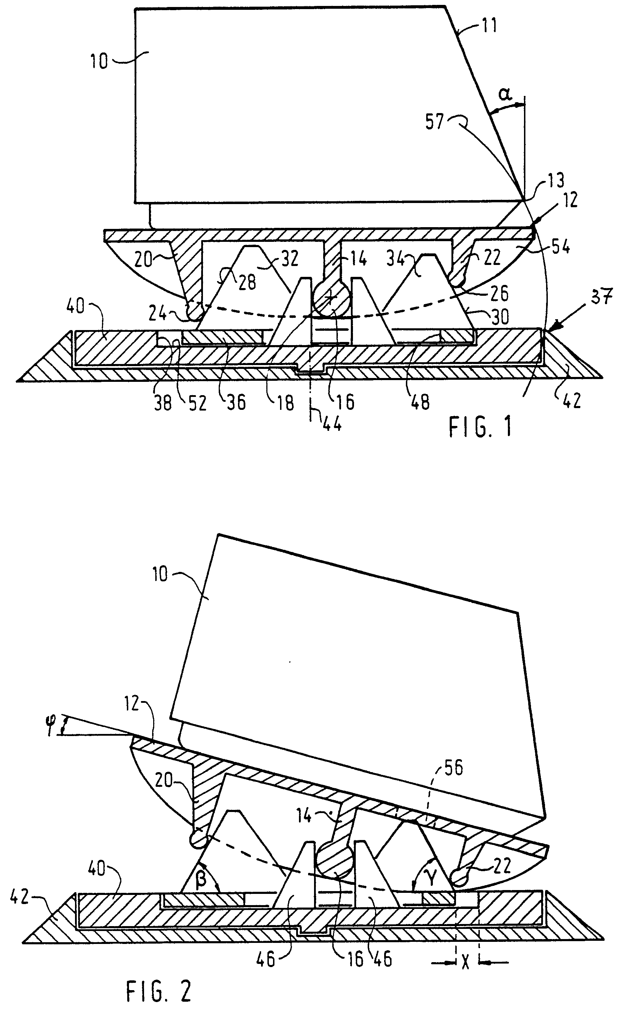

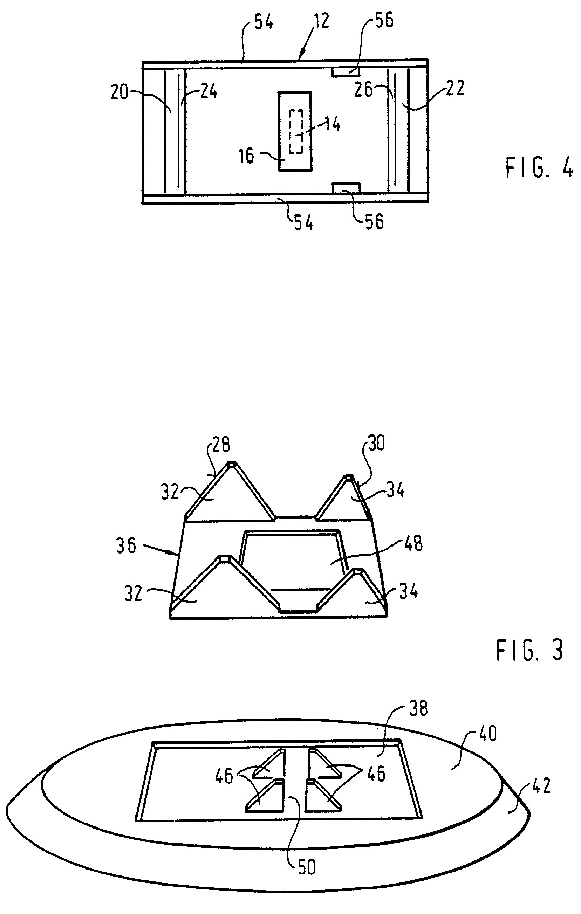

In Fig. 1 erkennt man ein Datensichtgerät 10, das auf einer im wesentlichen rechteckigen Trägerplatte 12 ruht. An der Unterseite der Trägerplatte ist in einem mittleren Bereich derselben mittels eines Steges 14 ein zylindrischer Stab oder Zapfen 16 mit parallel zur Plattenebene verlaufender Zylinderachse 18 angeordnet. Beiderseits des Steges 14 bzw. des Zapfens 16 erstreckt sich jeweils parallel zur Zylinderachse 18 eine im Querschnitt annähernd dreieckförmige Rippe oder Leiste 20 bzw. 22 im wesentlichen über die gesamte Breite der Trägerplatte 12 (siehe Fig. 4).

Mit ihrer jeweils wulstförmig abgerundeten freien Kante 24 bzw. 26 liegen die Rippen 20 bzw. 22 an der äußeren schrägen Kantfläche 2. bzw. 30 von trapezförmigen Böcken 32 bzw. 34 an, die entlang den Längsrändern einer Zwischenplatte 36 von dieser nach oben abstehend angeordnet sind (siehe auch Fig. 3). Die Zwischenplatte 36 ist Teil des allgemein mit 37 bezeichneten Fußes der Trägeranordnung und liegt in einer rechteckigen flachen Aussparung 38 in der Oberseite einer kreisförmigen Fußplatte 40, die in einem flachen Rahmen 42 um eine vertikale Achse 44 drehbar gelagert ist. Aufder Grundfläche der Aussparung 38 sind vier Böcke 46 angeordnet, welche durch eine rechteckige Durchbrechung 48 in der Zwischenplatte 36 hindurch ragen und miteinander eine Gabel 50 zur Aufnahme des Zapfens 16 bilden. Die Aussparung 38 in der Fußplatte 40 und die Durchbrechung 48 in der Zwischenplatte 36 sind so bemessen, daß die Zwischenplatte 36 gegenüber der Fußplatte 40 um eine begrenzte Strecke in Richtung des Doppelpfeiles A in Fig. 1 hin und her verschoben werden kann.

Wie ein Vergleich zwischen den Fig. 1 und 2 zeigt, erfolgt die Schwenkbewegung der Trägerplatte 12 und damit des Datensichtgerätes 10 gegenüber der Fußplatte 40 um die Zylinderachse 18 des Zapfens 16. Der maximale Schwenkwinkel $\varphi$ ist wie im dargestellten Fall vorzugsweise gleich dem Winkel $\alpha$ gewählt, den die Frontseite bzw. Sichtscheibe 11 des Datensichtgerätes in horizontaler Stellung desselben mit der Vertikalen bildet (siehe Fig. 1 und 2). Bei der Schwenkbewegung gleiten die Rippen 20 und 22 mit ihren abgerundeten freien Kanten 24 bzw. 26 auf den schrägen Kantflächen 28 bzw. 30 der Böcke 32 bzw. 34, wobei gleichzeitig die Zwischenplatte 36 in Richtung des Doppelpfeiles A verschoben wird, da die Trägerplatte 12 durch den zwischen den Böcken 46 gehaltenen Zapfen 16 an einer Horizontalbewegung gegenüber der Fußplatte 40 gehindert wird. Wie man sieht, liegt die Trägerplatte 12 in jeder Schwenkstellung mit den Rippen 20 bzw. 22 auf den Böcken 32 bzw. 34 der Zwischenplatte 36 auf. Dadurch ist in jeder Stellung der Trägerplatte 12 eine Selbsthemmung gegeben, die zumindest annähernd proportional dem Gewicht des auf der Trägerplatte 12 ruhenden Datensichtgerätes 10 ist. Das Gleitverhalten der Zwischenplatte 36 gegenüber der Fußplatte 40 sowie das Gleiten der Rippen 20 und 22 auf den Böcken 32 bzw. 34 kann durch eine Oberflächengestaltung der aufeinander gleitenden Teile beeinflußt werden. Gegebenenfalls kann das Gleitverhalten auch durch eine entsprechende Gleit- oder Bremsschicht 52 zwischen der Zwischenplatte 36 und dem Boden der Aussparung 3. beeinflußt werden.

Im vorliegenden Fall wird die horizontale Stellung der Trägerplatte 12 durch die Oberkante der Böcke 32 begrenzt, auf denen die Trägerplatte 12 in ihrer horizontalen Stellung aufliegt. Die Begrenzung des Schwenkwinkels der Trägerplatte 12 in der in der Figur 2 dargestellten Stellung kann beispielsweise durch zwei seitliche Wangen 54 erfolgen, die entlang der Längsränder der Trägerplatte 12 von dieser nach unten abstehen und den Schwenkmechanismus nach außen hin abdecken. Es sind jedoch auch andere Anschläge zur Begrenzung des Schwenkweges in der jeweiligen Endstellung der Trägerplatte 12 denkbar.

Um in jeder Schwenklage der Trägerplatte 12 eine Auflage der Rippen 20 und 22 mit ihren Kanten 24 bzw. 26 auf den Böcken 32 bzw. 34 zu gewährleisten, müssen die Neigungswinkel $\beta$ und $\gamma$ der Kantflächen 28 bzw. 30 (siehe Fig. 2) in einer bestimmten Relation zu den Abständen der Kanten 24 und 26 von der Achse 18, dem maximalen Schwenkwinkel $\varphi$ und dem maximalen Verschiebeweg X der Zwischenplatte 36 stehen. Soll die Schwenkachse 18 ortsfest bleiben, so lassen sich diese Winkel $\beta$ und $\gamma$ bei Vorgabe der anderen Größen graphisch oder durch trigonometrische Berechnungen auf einfache Weise ermitteln. Die Anordnung kann jedoch auch so getroffen werden, daß die Schwenkachse 18 sich bei der Schwenkbewegung der Trägerplatte 12 in vertikaler Richtung auf und ab bewegt.

Man erkennt, daß die Unterkante 13 der Sichtfläche 11 des Datensichtgerätes beim Verschwenken desselben um die Schwenkachse 18 dem Bogen 57 folgt und sich damit geringfügig in Richtung auf die Bedienungsperson bewegt. Diese Änderung des Abstandes zwischen dem Datensichtgerät, gemessen an dessen Kante 13, und der Bedienungsperson kann minimal gemacht werden, wenn der Winkel zwischen einer durch die Achse 18 und die Kante 13 verlaufenden Ebene und der Horizontalebene (in der Fig. 1 betrachtet) gleich $\varphi/2$ ist. Bei dieser Anordnung ist die mit der Schwenkbewegung verbundene Abstandsänderung praktisch vernachlässigbar.

Je nach der Größe des Schwenkwinkels φ kann es erforderlich sein, in der Trägerplatte 12 schlitzförmige Öffnungen 56 vorzusehen, in welche die Böcke 34 in der in der Fig. 2 dargestellten maximalen Schwenkstellung der Trägerplatte 12 eintauchen können.

Die vorstehende Beschreibung zeigt, daß die erfindungsgemäße Trägeranordnung äußerst preiswert und einfach hergestellt und montiert werden kann. Die Trägerplatte 12, die Zwischenplatte 36 und die Fußplatte 40 können jeweils einstückig, beispielsweise aus Kunststoff hergestellt werden, ohne daß eine Nachbearbeitung erforderlich ist.

Die Montage erfolgt durch einfaches Aufeinanderlegen dieser Teile. Es sind weder Schrauben noch Hebel noch irgendeine Hebemechanik erforderlich. Die Bedienung ist äußerst einfach. Die Arretierung der Trägerplatte 12 erfolgt in jeder Lage durch Selbsthemmung proportional dem Gerätegewicht.

## Patentansprüche

1. Trägeranordnung für ein Datensichtgerät (10) mit einem Fuß (37) und einer an diesem Fuß um eine im wesentlichen horizontale Schwenkachse schwenkbar gelagerten Trägerplatte (12) die an ihrer Unterseite Auflageelemente (20, 22) aufweist, mit denen sie beiderseits der Schwenkachse auf gegenläufig geneigten Gleitflächen (28, 30) des Fußes (37) aufliegt, dadurch gekennzeichnet, daß der Fuß (37) eine Fußplatte (40) und eine Zwischenplatte (36) umfaßt, die auf der Fußplatte (40) horizontal frei verschiebbar gelagert ist und beide Gleitflächen (28, 30) trägt, und daß die Trägerplatte (12) an ihrer Unterseite in einem mittleren Bereich zwischen den Auflageelementen (20, 22) ein erstes Gelenkteil (16) trägt, das in ein an der Fußplatte (40) angeordnetes zweites Gelenkteil (50) eingreift.

2. Trägeranordnung nach Anspruch 1, dadurch gekennzeichnet, daß das Gelenk zwischen Fußplatte (40) und Trägerplatte (12) eine mit einer der beiden Platten (40, 12) verbundene Gabel (46, 50) und einen mit der jeweils anderen Platte (12, 40) verbundenen, in die Gabel (46, 50) eingreifenden plattenparallelen Zapfen (16) umfaßt.

3. Trägeranordnung nach Anspruch 2, dadurch gekennzeichnet, daß die Zwischenplatte (36) eine Aussparung (48) zum Durchtritt des mit der Fußplatte (40) verbundenen Gelenkteiles (46, 50) aufweist.

4. Trägeranordnung nach einem der Ansprüche 1 bis 3, dadurch gekennzeichnet, daß die Fußplatte (40) eine Schiebeführung (38) für die Zwischenplatte (36) aufweist.

5. Trägeranordnung nach einem der Ansprüche 1 bis 4, dadurch gekennzeichnet, daß zwischen der Zwischenplatte (36) und der Fußplatte (40) eine Gleitschicht (52) angeordnet ist.

6. Trägeranordnung nach einem der Ansprüche 1 bis 5, dadurch gekennzeichnet, daß die Gleitflächen (28, 30) an mit der Zwischenplatte (36) verbundenen trapezförmigen Böcken (32, 34) ausgebildet sind.

7. Trägeranordnung nach einem der Ansprüche 1 bis 6, dadurch gekennzeichnet, daß die Auflageelemente von parallel zu der Schwenkachse (18) gerichtete Auflageleisten (20, 24; 22, 26) gebildet sind.

8. Trägeranordnung nach einem der Ansprüche 1 bis 7, dadurch gekennzeichnet, daß die Fußplatte (40) in einem Rahmen (42) drehbar gelagert ist.

## Claims

1. Support arrangement for a visual display unit (10), with a base (37) and a support plate (12) pivotably mounted on said base for movement about a substantially horizontal swivel axis, said support plate (12) has at its underside support elements (20, 22) with which said support plate rests on oppositely inclined gliding surfaces (28, 30) of said base (37) on opposite sides of the swivel axis, characterized in that said base (37) comprises a base plate (40) and an intermediate plate (36), which is supported by said base plate (40) so as to be freely shiftable in a horizontal direction and which carries said two gliding surfaces (28, 30), and that said support plate (12) has on its underside, in a central range between said support elements (20, 22), a first link element (16) engaging a second link element (50) disposed on said base plate (40).

2. Support arrangement as claimed in Claim 1, characterized in that the link between said base plate (40) and said support plate (12) comprises a fork element (46, 50) connected with one of said two plates (40, 12) and a pivot (16), which is parallel to said two plates, connected with the respective other plate (12, 40) and engaging said fork element (46, 50).

3. Support arrangement as claimed in Claim 2, characterized in that said intermediate plate (36) has a cutout (48) for allowing said link element (46, 50) connected with said base plate (40) to pass through.

4. Support arrangement as claimed in any one of Claims 1 to 3, characterized in that said base plate (40) has a sliding guide (38) for said intermediate plate (36).

5. Support arrangement as claimed in any one of Claims 1 to 4, characterized in that a slide layer (52) is arranged between said intermediate plate (36) and said base plate (40).

6. Support arrangement as claimed in any one of Claims 1 to 5, characterized in that said gliding surfaces (28, 30) are provided on trapezoidal supports (32, 34) which are connected to said intermediate plate (36).

7. Support arrangement as claimed in any one of Claims 1 to 6, <u>characterized in that</u> said support elements consist of seating ridges (20, 24; 22, 26) extending parallel to said swivel axis (18).

8. Support arrangement as claimed in any one of Claims 1 to 7, <u>characterized in that</u> said base plate (40) is rotatably supported in a frame (42).

**Revendications**

1. - Agencement de support pour un écran de visualisation (10) comportant un pied (37) et une plaque support (12) montée à pivotement sur ce pied autour d'un axe de pivotement sensiblement horizontal, laquelle comporte sur son côté inférieur des éléments d'appui (20, 22) par lesquels elle s'appuie de chaque côté de l'axe de pivotement sur des surfaces de glissement (28, 30) du pied (37) inclinées en sens inverse, caractérisé en ce que le pied (37) comporte une plaque d'assise (40) et une plaque intermédiaire (36) qui est montée sur la plaque d'assise (40) de façon à se déplacer librement à l'horizontale et qui porte les deux surfaces de glissement (28, 30), et en ce que la plaque support (12) porte sur son côté inférieur, dans une zone médiane entre les éléments d'appui (20, 22), un premier élément d'articulation (16) qui pénètre dans un second élément d'articulation (50) disposé sur la plaque d'assise (40).

2. - Agencement de support selon la revendication 1, caractérisée en ce que l'articulation comporte entre la plaque d'assise (40) et la plaque support (12) une fourche (46, 50) reliée à l'une des deux plaques (40,12) et un tourillon (16) reliée à l'autre plaque (12, 40), parallèle aux plaques et pénétrant dans la fourche (46, 50).

3. - Agencement de support selon la revendication 2, caractérisé en ce que la plaque intermédiaire (36) comporte un évidement (48) pour le passage de la partie d'articulation (46, 50) reliée à la plaque d'assise (40).

4. - Agencement de support selon l'une des revendications 1 à 3, caractérisé en ce que la plaque d'assise (40) comporte un guidage coulissant (38) pour la plaque intermédiaire (36).

5. - Agencement de support selon l'une des revendications 1 à 4, caractérisé en ce qu'on dispose entre la plaque intermédiaire (36) et la plaque d'assise (40) une couche de glissement (52).

6. - Agencement de support selon l'une des revendications 1 à 5, caractérisé en ce que les surfaces de glissement (28, 30) sont réalisées sur des chevalets (32, 34) trapézoïdaux reliés à la plaque intermédiaire (36).

7. - Agencement de support selon l'une des revendications 1 à 6, caractérisé en ce que les éléments d'appui sont constitués par des bandeaux d'appui (20, 24; 22, 26) parallèles à l'axe de pivotement (18).

8. - Agencement de support selon l'une des revendications 1 à 7, caractérisé en ce que la plaque d'assise (40) est montée pivotante dans un socle (42).

FIG. 1

FIG. 2

FIG. 4

FIG. 3